# FASCICULE DE BREVET EUROPEEN

(11) **EP 3 891 068 B1**
(45) Date de publication et mention de la délivrance du brevet: **19.07.2023**
(21) Numéro de dépôt: 19816635.7
(22) Date de dépôt: 04.12.2019
(51) Int. Cl.: B64U 70/95, B64F 1/18, G05D 1/06, G08G 5/00, G08G 5/02

(54) **SYSTÈME DE GUIDAGE POUR L'ATTERRISSAGE D'UN DRONE**
LANDUNGSFÜHRUNGSSYSTEM FÜR EINE DROHNE
LANDING GUIDANCE SYSTEM FOR A DRONE

(30) Priorité: 06.12.2018 FR 1872444
(43) Date de publication de la demande: 13.10.2021
(73) Titulaire: Hoverseen, 75015 Paris (FR)
(72) Inventeur: VILLIERS, Eric, 75015 PARIS (FR)
(74) Mandataire: Argyma
(86) Numéro de dépôt international: PCT/EP2019/083659
(87) Numéro de publication internationale: WO 2020/115123

(56) Documents cités:
- US-A1- 2015 051 758
- US-A1- 2015 158 598
- US-A1- 2016 039 541
- US-A1- 2016 259 333
- US-A1- 2018 237 161

## Description

### DOMAINE TECHNIQUE ET OBJET DE L'INVENTION

La présente invention se rapporte au domaine des drones aériens, autrement dit des véhicules aériens sans pilote embarqué. Plus précisément, la présente invention vise la gestion de vol automatique de drones, en particulier en phase d'atterrissage.

### ETAT DE LA TECHNIQUE

Comme cela est connu, un drone peut être piloté via une télécommande ou être configuré pour gérer automatiquement son vol.

En particulier, des drones automatiques sont aujourd'hui configurés pour suivre automatiquement un plan de vol, par exemple à des fins de surveillance d'une zone. De tels drones, à système de motorisation électrique alimenté par une ou plusieurs batteries ou autres moyens d'accumulation, doivent régulièrement retourner à leur base pour se connecter à une plateforme d'accueil et de recharge en vue de recharger leur(s) batterie(s).

Cette opération s'effectue généralement via une « base » au sol, qui cumule parfois des fonctions de protection contre les intempéries et de gestion de la charge de la batterie.

Selon l'invention, une telle base peut assurer la gestion du pilotage automatique du drone, au moyen d'un calculateur.

Afin de recharger une batterie du drone, il est ainsi nécessaire de connecter sa batterie à un chargeur agencé sur une plateforme d'accueil et de recharge (appartenant à la « base »), en respectant les polarités respectives du chargeur et de la batterie.

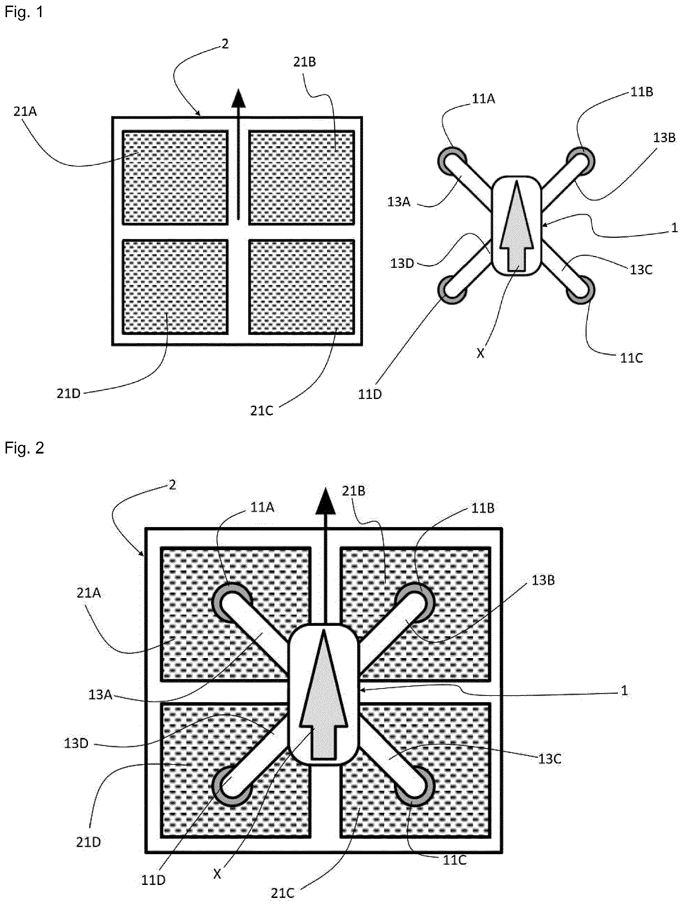

Les figures 1 à 3 montrent ainsi un drone 1 et une plateforme d'accueil et de recharge 2, respectivement vus de dessus avec le drone 1 à côté de la plateforme 2, vus de dessus avec le drone 1 aligné verticalement sur la plateforme 2, et vus de côté avec le drone 1 en phase finale d'approche de la plateforme 2.

Pour réaliser les connexions électriques requises entre le drone 1 et la plateforme d'accueil et de recharge 2, il est notamment possible d'utiliser des « pieds » 13A à 13D du drone 1, lesdits pieds comprenant, à leur extrémité libre, des connecteurs électriques respectifs 11A à 11D, étant entendu qu'il faut que chaque connecteur électrique 11A, 11B, 11C, 11C soit positionné au contact du connecteur électrique correspondant 21A, 21B, 21C, 21D, autrement dit au contact d'une zone de contact correspondante permettant d'établir la liaison électrique adéquate de la batterie du drone 1 avec le chargeur électrique de la plateforme d'accueil et de recharge 2, de façon à respecter les polarités.

A titre d'exemple, une batterie Lithium Polymère, également désignée batterie LiPo, à trois cellules de type 3S, nécessite, comme représenté sur les figures, 4 connexions électriques distinctes au chargeur électrique de la plateforme d'accueil et de recharge 2.

Pour que les pieds - connecteurs électriques 11A à 11D - du drone 1 se connectent sur les connecteurs électriques 21A à 21D correspondants de la plateforme d'accueil et de recharge 2, lesdits pieds 11A à 11D doivent être amenés au contact des connecteurs électriques 21A à 21D du chargeur de la plateforme d'accueil et de recharge 2.

Autrement dit, les pieds 13A à 13D doivent être posés sur les zones adéquates respectives, une fois le drone 1 posé sur la plateforme d'accueil et de recharge 2.

A cette fin, l'homme du métier envisagerait d'utiliser un système mécanique configuré pour déplacer le drone, une fois ce dernier posé à proximité du chargeur, afin de positionner correctement ledit drone et ses connecteurs électriques sur les connecteurs électriques correspondant du chargeur de la plateforme d'accueil et de recharge.

Selon l'état de l'art, il est aussi possible, comme cela est décrit dans le document WO 2017/044798 A1, de réaliser un guide en forme d'entonnoir au niveau de la plateforme d'accueil et de recharge. Ce guide amène les pieds - connecteurs électriques du drone sur les connecteurs électriques correspondants du chargeur. Un tel guide s'étend verticalement et implique une station d'accueil présentant un volume important.

Ces solutions connues présentent différents inconvénients. D'abord, elles impliquent un guidage automatique autonome suffisamment précis pour, soit se poser à proximité suffisante du bras mécanique, soit permettre un atterrissage sur le guide en forme d'entonnoir. En outre, elles engendrent une grande complexité mécanique pour le bras supposé manipuler le drone, et / ou un grand encombrement, s'agissant notamment de la plateforme d'accueil et de recharge doté d'un guide en forme de cône ou de pyramide à base rectangulaire. La complexité engendre des surcoûts, des risques de pannes et nécessitent des précautions d'usage ; l'encombrement engendre des difficultés, notamment, pour transporter le drone.

Il existe donc un besoin pour un procédé de guidage d'un drone en vol automatique, qui permette l'atterrissage fin d'un drone sur une plateforme d'accueil et de recharge en tenant compte de l'orientation adéquate du drone et de connecteurs électriques qu'il comprend vis-à-vis de connecteurs électriques correspondant auxquels ledit drone doit se connecter pour recharger une batterie embarquée.

Ainsi, un drone automatique peut être interfacé avec un système de géo-positionnement par satellite (GPS, Galileo, etc.) pendant toute la durée de sa mission. Selon l'invention, lorsque ledit drone doit revenir à sa base, par exemple pour recharger sa batterie sur une plateforme d'accueil et de recharge, le système de géo-positionnement permet au drone de se positionner à proximité de ladite plateforme d'accueil, toujours en vol, puis le guidage du drone durant la phase d'atterrissage est effectué au moyen d'un calculateur relié à une caméra installée au niveau de la plateforme d'accueil. La caméra capture des images du drone en vol et le calculateur détermine la position relative du drone en repérant la position de deux sources lumineuses distinguables installées en deux points distincts sur le drone. Le calculateur détermine alors des consignes de pilotage destinés au drone pour l'amener à atterrir, notamment dans une position adéquate, sur la plateforme d'accueil.

Le document US 2016039541 A1 divulgue un autre système d'aide à l'atterrissage d'un drone, en l'espèce un « multicoptère », selon lequel ledit multicoptère comporte une armature spéciale comprenant des sources lumineuses formant un motif particulier reconnaissable, et la plateforme d'accueil comprend une caméra et des moyens pour reconnaître ledit motifs, ainsi que des moyens pour envoyer au multicoptère des jeux de données de commande afin d'aider au pilotage automatique dudit multicoptère durant une phase d'atterrissage.

Toutefois, le système décrit dans ce document requiert l'installation sur le drone, ou plus précisément sous le drone, d'un cadre, sur lesquels sont notamment disposées des LED, ledit cadre dépassant du drone d'au moins 20% en largeur, ce qui rend ledit drone moins manoeuvrable, en particulier s'agissant de drones de petite taille et faible puissance. La position d'un tel cadre engendre également une gêne pour l'utilisation d'une caméra embarquée par exemple, car des portions du cadre, notamment, peuvent entrer dans le champ de vision d'une telle caméra embarquée.

En outre, le système et le procédé décrits dans ce document doivent aussi être rendus plus robustes, notamment vis-à-vis de toute imprécision dans la détermination de la position du drone ou dans la réalisation des commandes de pilotage par ledit drone.

C'est par conséquent l'objet de la présente invention que de résoudre ces inconvénients, notamment en s'affranchissant de tout élément surchargeant ledit drone ou nécessitant de modifier sa structure ou son logiciel embarqué.

### PRESENTATION GENERALE DE L'INVENTION

L'invention vise un procédé de guidage automatique d'un drone par un calculateur, pour l'exécution d'un atterrissage du drone sur une plateforme d'accueil et de recharge, le drone comprenant un premier moyen lumineux émettant un premier signal lumineux et un deuxième moyen lumineux émettant un deuxième signal lumineux différent du premier signal lumineux, le premier moyen lumineux et le deuxième moyen lumineux étant fixés en deux points distincts du drone, la station recevant des images capturées par une caméra filmant un espace délimité comprenant un volume surplombant la plateforme d'accueil et de recharge, le drone et le calculateur ayant des moyens de communication leur permettant de communiquer directement entre eux, ledit procédé comprenant les étapes suivantes :
- lorsque le drone pénètre dans l'espace délimité en vue d'atterrir sur la plateforme d'accueil et de recharge, l'analyse des images capturées par la caméra, lesdites images comprenant le drone, pour identifier le premier signal lumineux et le deuxième signal lumineux et ainsi localiser les premier et deuxième moyens lumineux,
- la détermination de la position et de l'orientation du drone en fonction de la position déterminée des premier et deuxième moyens lumineux,
- la génération, par le calculateur, de consignes de pilotage destinées au drone, configurées pour le guider vers la plateforme d'accueil et de recharge,
- l'émission desdites consignes de pilotage à destination du drone,
- la réception et la mise en oeuvre desdites consignes par le drone
- les consignes de pilotage comprenant des consignes pour amener le drone en vol stationnaire à l'aplomb du centre de la plateforme d'accueil et de recharge suivies de consignes de descente du drone vers la plateforme d'accueil et de recharge jusqu'à l'atterrissage dudit drone.

Grâce à l'invention, le drone est ainsi piloté automatique, notamment depuis une base, de façon à pouvoir atterrir de façon précise sur la plateforme d'accueil et de recharge, notamment dans une position et avec une orientation adaptée en vue de la recharge de la batterie dudit drone.

Selon un mode de réalisation, les consignes de pilotage comprennent des consignes de gaz et d'attitude.

Selon un mode de réalisation, les consignes de pilotage comprennent, lors de la mise en oeuvre des consignes de descente par le drone, si la position dudit drone par rapport à l'aplomb du centre de la plateforme d'accueil et de recharge s'écarte au-delà d'une tolérance prédéfinie, notamment au-delà de 15° ou au-delà de 30°, selon les axes considérés, une consigne d'arrêt de la descente du drone est générée, émise et mise en oeuvre le drone, puis des consignes de pilotage sont générées, émises et mises en oeuvre par le drone de sorte à repositionner ledit drone en vol stationnaire à l'aplomb du centre de la plateforme d'accueil et de recharge, puis des consignes de descente du drone vers la plateforme d'accueil et de recharge sont générées, émises et mises en oeuvre par le drone

Selon un mode de réalisation, le procédé comprend, si le drone sort de l'espace délimité, l'émission d'une consigne de pilotage comprenant une consigne de remontée du drone à la verticale de sa position.

Selon un mode de réalisation, l'espace délimité est un cône ou une pyramide à base rectangulaire dont l'apex est la caméra située au centre de la plateforme d'accueil et de recharge.

Selon l'invention, le procédé comprend, lorsque le drone met en oeuvre des consignes lesdites consignes de pilotage comprenant des consignes visant à amener ledit drone en vol stationnaire à l'aplomb du centre de la plateforme d'accueil et de recharge, si les images capturées par la caméra ne permettent pas d'identifier le premier signal lumineux et le deuxième signal lumineux du drone, alors le calculateur génère et émet des consignes de pilotage prédéfinies au drone de sorte qu'il décrive un mouvement de spirale dans le plan horizontal, ce mouvement étant configuré pour conduire ledit drone à pénétrer l'espace délimité.

L'invention vise également un système de drone, comprenant un drone, une plateforme d'accueil et de recharge et un calculateur, le système étant configuré pour mettre en oeuvre le procédé tel que brièvement décrit précédemment, le drone comprenant un premier moyen lumineux émettant un premier signal lumineux et un deuxième moyen lumineux émettant un deuxième signal lumineux différent du premier signal lumineux, dans lequel les premier et deuxième moyens lumineux sont fixés au drone de part et d'autre d'un axe longitudinal du drone.

Selon un mode de réalisation, la plateforme d'accueil et de recharge comprend un chargeur électrique présentant des connecteurs électriques et le drone comprend des connecteurs électriques complémentaires, lesdits connecteurs électriques du drone et les connecteurs électriques ayant une polarité respective, et les consignes de pilotage étant configurées pour respecter les polarités lors de l'atterrissage du drone.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
- Fig. 1 (déjà commentée) illustre schématiquement un drone et une plateforme d'accueil et de recharge ;
- Fig. 2 (déjà commentée) illustre schématiquement un drone posé sur une plateforme d'accueil et de recharge ;
- Fig. 3 (déjà commentée) montre un drone, de face, en phase d'approche finale d'une plateforme d'accueil et de recharge ;
- Fig. 4 représente, conformément à l'invention, un drone équipé de moyens lumineux distinguables, piloté par un calculateur à partir d'images capturées dudit drone ;
- Fig. 5 illustre schématiquement, vue du dessous, un espace délimité capturé par la caméra, dans lequel se trouve le drone.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE D'UNE FORME DE REALISATION DE L'INVENTION

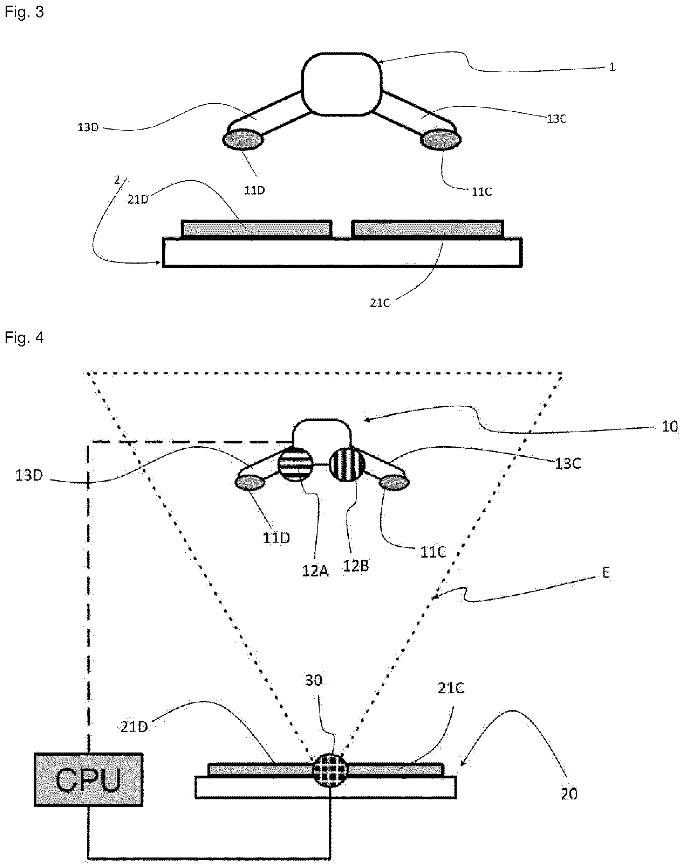

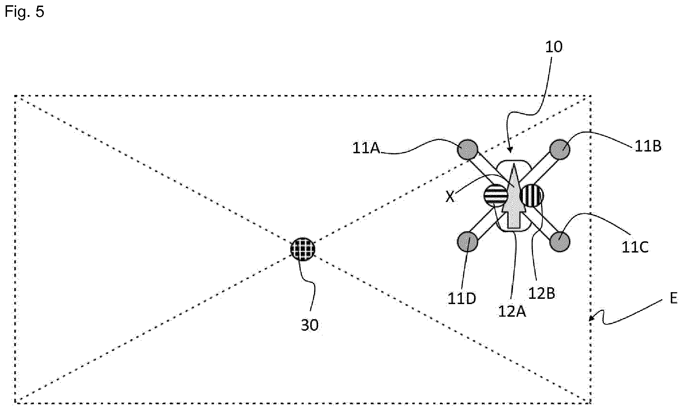

Les figures 4 et 5 représentent des vues schématiques de systèmes de drone permettant la mise en oeuvre de l'invention.

Le procédé selon l'invention permet un positionnement précis du drone 10 sur la plateforme d'accueil 20 lors du retour du drone vers ladite plateforme d'accueil, notamment dans un but de recharge de sa batterie.

La mise en oeuvre du procédé selon l'invention permet le pilotage automatique fin du drone 10, en phase d'atterrissage, jusqu'à son posé sur la plateforme d'accueil et de recharge 20. Le procédé selon l'invention permet de poser le drone avec une précision qui permet ainsi de placer les pieds 13A à 13D du drone 10, lesdits pieds étant munis de contacts électriques formant des connecteurs électriques 11A à 11D du drone 10, sur des zones de contact, présentant notamment des surfaces métalliques, formant des connecteurs électriques 21A à 21D du chargeur de la plateforme d'accueil et de recharge 20, permettant d'établir une liaison électrique entre la batterie du drone 10 et le chargeur.

L'invention permet ainsi de réaliser la charge de la batterie sans faire intervenir un système de placement mécanique, source d'éventuels dysfonctionnements, tout en limitant l'encombrement de la plateforme en l'absence de moyens de guidage mécanique verticaux.

A cet effet, en référence notamment à la figure 4, l'invention repose sur un drone 10 pilotable à distance, via des moyens de communication, par exemple au moyen d'une liaison radio, ledit drone 10 étant équipé d'au moins deux moyens lumineux distinguables, notamment de couleurs et / ou de formes différentes. Par exemple, ces moyens lumineux peuvent être des diodes électroluminescentes, dont au moins une diode électroluminescente émettant une lumière rouge et au moins une diode électroluminescente émettant une lumière verte, lesdites diodes électroluminescente rouge et verte étant respectivement fixées au drone 10 en deux points différents, notamment de part et d'autre d'un axe longitudinal X du drone 10.

Toujours selon l'invention et en référence notamment à la figure 4, une caméra 30 est installée au sol et orientée de façon à filmer un espace délimité E destiné à comprendre le drone dans sa phase finale d'approche et d'atterrissage. L'espace délimité E correspond à une zone de détection : lorsque le drone pénètre cet espace délimité E, il est repérable car filmé par la caméra 30, ce qui permet la mise en oeuvre du procédé selon l'invention.

Selon un mode de réalisation, la caméra 30 est installée au niveau de la plateforme d'accueil et de recharge 20 et orientée verticalement vers le ciel. La caméra 30 capture des images correspondant à l'espace délimité E, en forme de pyramide à base rectangulaire, destiné à comprendre le drone 10 dans sa phase finale d'approche et d'atterrissage sur la plateforme d'accueil et de recharge 20.

Le système pour mettre en oeuvre le procédé selon l'invention comprend par ailleurs un calculateur CPU, représenté schématiquement sur la figure 5. Le calculateur CPU assure le traitement et l'analyse des images capturées par la caméra 30. Le calculateur CPU est relié à la caméra 30 et au drone 10 par des moyens de communication adaptés.

Le calculateur CPU est configuré pour communiquer avec le drone 10 et pour lui envoyer des consignes de pilotage. Il est à noter que la mise en oeuvre du procédé selon l'invention ne nécessite pas de modification du logiciel embarqué du drone 10 lorsque celui-ci est choisi sur étagère. Le seul prérequis réside dans le fait que le drone dispose de moyens de communication pour recevoir des consignes de pilotage.

Le drone 10 comprend des moyens lumineux 12A, 12B, émettant un signal lumineux distinguable l'un de l'autre et disposé sur le drone 10 en deux points distincts, comme représenté sur les figures 4 et 5.

Par exemple, il peut s'agir de diodes électroluminescentes rouges et vertes disposées de part et d'autre d'un axe longitudinal du drone 10. Il peut aussi s'agir d'autres types de sources lumineuses, par la couleur ou par la forme notamment, disposées en deux points distincts du drone 10.

Dans le cas où les moyens lumineux 12A, 12B sont des sources lumineuses respectivement rouge et verte disposées de part et d'autre de l'axe longitudinal X du drone 10, le calculateur CPU peut distinguer la droite de la gauche du drone, en plus de la position dans l'espace. De ce fait, le calculateur CPU est configuré pour déterminer les consignes de pilotage permettant de guider automatique le drone 10 jusqu'à la plateforme d'accueil et de recharge 20 et de l'y poser dans un sens adapté pour que les connecteurs électriques 11A à 11D du drone 10 se trouvent en contact, dans le respect des polarités, avec les connecteurs électriques 21A à 21D de la plateforme d'accueil et de recharge 20 en vue d'assurer la recharge de la batterie du drone 10.

Ainsi, en résumé, pour mettre en oeuvre le procédé selon l'invention, il faut un drone équipé de moyens lumineux 12A, 12B distinguables, situés en deux points distincts dudit drone 10, visibles de l'extérieur par une caméra 30 située au sol. En particulier, selon un mode de réalisation, lesdits moyens lumineux 12A, 12B sont fixés au drone 10 de part et d'autre d'un axe longitudinal X dudit drone 10.

Un calculateur CPU est configuré pour recevoir et analyser les images capturées par la caméra 30 et pour déterminer la position et l'orientation du drone 10 grâce au repérage desdits moyens lumineux 12A, 12B. La position de la plateforme d'accueil et de recharge 20 étant connue du calculateur CPU, ledit calculateur CPU détermine les consignes de pilotage à appliquer par le drone 10 pour que ce dernier vienne se poser sur la plateforme d'accueil et de recharge 20 dans une position adaptée pour que les connecteurs électriques 11A à 11D du drone se trouvent en contact avec les connecteurs électriques 21A à 21D de la plateforme d'accueil et de recharge en respectant les polarités du chargeur et de la batterie du drone 10.

Le calculateur CPU implémente ainsi un protocole de communication avec le drone 10 permettant le transfert et la mise en oeuvre de consignes de pilotage adaptées.

Plus précisément, toujours en référence aux figures 4 et 5, la caméra 30 est par exemple installée au niveau de la plateforme d'accueil et de recharge 20, notamment au centre de ladite plateforme, et filme un espace délimité E surplombant ladite plateforme d'accueil et de recharge 20. L'espace délimité E présente par exemple une forme de pyramide à base rectangulaire ayant pour apex, par définition, la caméra 30.

Lorsque le drone 10 pénètre dans l'espace délimité E avec pour objectif de se poser sur la plateforme d'accueil et de recharge 20, notamment en vue d'y recharger sa batterie, le procédé selon l'invention prévoit le pilotage automatique du drone 10 par le calculateur CPU.

Le calculateur CPU reçoit les images capturées par la caméra 30, au moyen de moyens de communication adaptés, et détermine la position des moyens lumineux 12A, 12B dans un plan horizontal au-dessus de la caméra 30, à l'intérieur de l'espace délimité E en forme de pyramide à base rectangulaire de vue de la caméra 30. A partir des positions des moyens lumineux 12A, 12B, le calculateur CPU détermine la position du drone 10 dans l'espace et donc la position relative du drone 10 dans le plan au-dessus de la caméra 30, et donc la position relative du drone 10 par rapport à la plateforme d'accueil et de recharge 20.

Le calculateur CPU détermine alors les consignes de pilotage pour le drone 10. Selon un mode de réalisation, le procédé selon l'invention prévoit que lesdites consignes de pilotage soient configurées pour que le drone reste, dans un premier temps, en vol stationnaire au-dessus du centre de la plateforme d'accueil et de recharge, ledit centre pouvant se confondre avec la position de la caméra 30.

Sur la figure 5, vue de dessous, le calculateur CPU amène le drone 10 vers la gauche puis vers le bas pour le positionner au-dessus du centre de la plateforme d'accueil et de recharge, qui correspond à la position de la caméra 30 en l'occurrence.

Une fois le drone 10 en position, à l'aplomb du centre de la plateforme d'accueil et de recharge 20, en particulier après une phase de vol stationnaire telle que décrite ci-dessus, son altitude est abaissée progressivement jusqu'à atteindre une altitude à laquelle le calculateur CPU lui commande d'atterrir, par exemple en coupant ses moyens de motorisations, notamment en stoppant des rotors dont il est pourvu. Les consignes de pilotage comprennent ainsi, notamment, des consignes de gaz, d'attitude, de descente et, éventuellement, de remontée.

Selon un mode de réalisation, lors de l'abaissement de l'altitude du drone, si sa position par rapport à l'aplomb du centre de la plateforme d'accueil et de recharge 20 s'écarte au-delà d'une tolérance prédéfinie, par exemple au-delà de 15 °, la descente peut être stoppée et le drone 10 peut être repositionné en vol stationnaire à l'aplomb du centre de la plateforme d'accueil et de recharge 20, puis le procédé d'atterrissage automatique selon l'invention reprend son cours.

En cas de sortie involontaire du drone 10 de l'espace délimité E, le calculateur CPU peut envoyer au drone une consigne de remontée du drone 10 ou une consigne de retour à sa position initiale, là où le procédé selon l'invention pour l'atterrissage automatique du drone avait été démarré.

D'autres variantes de réalisation sont prévues en fonction du déroulement et de la stabilité du vol stationnaire du drone 10 à l'aplomb de la plateforme d'accueil et de recharge 20 et en fonction de la trajectoire exacte suivie par le drone de de sa descente vers la plateforme d'accueil et de recharge 20. Les consignes de pilotage déterminées par le calculateur CPU font ainsi l'objet de mises à jour, en fonction de boucles de rétroactions tenant compte des imprécisions de l'exécution des consignes de pilotage, des imprécisions du système de géo-positionnement par satellites, en fonctions des imprécisions dans la détermination de l'altitude du drone, en fonction du vent, en particulier du vent latéral, etc. En particulier, on peut utiliser les premiers et deuxièmes moyens lumineux également pour déterminer l'altitude précise du drone dans les derniers mètres, là où la précision des systèmes de géo-positionnement embarqués peuvent être insuffisants. A l'aide de l'écartement connu des premiers et deuxièmes moyens lumineux, on détermine la distance entre le drone et la caméra. Pour calculer l'altitude du drone, on prend alors en compte l'angle du drone par rapport à l'horizontale sur l'axe défini par les premiers et deuxièmes moyens lumineux. Cet angle provient de la compensation par le drone du vent latéral lorsqu'il se met en vol stationnaire.

Notamment, lorsque le drone 10 entreprend de se positionner dans l'espace délimité E avec pour objectif de se poser sur la plateforme d'accueil et de recharge 20, si la caméra 30 ne permet pas le repérage du drone 10, par exemple si la précision du système de géo-positionnement par satellite est insuffisante pour que le drone, en mode de guidage autonome, atteigne effectivement l'intérieur de l'espace délimité E, alors le calculateur CPU peut envoyer des consignes de pilotage prédéfinies au drone 10 de sorte qu'il décrive un mouvement de spirale dans le plan horizontal, ce mouvement étant configuré pour conduire ledit drone 10 à pénétrer le l'espace délimité E.

## Revendications

1. Procédé de guidage automatique d'un drone (10) par un calculateur (CPU), pour l'exécution d'un atterrissage du drone (10) sur une plateforme d'accueil et de recharge (20), le drone comprenant un premier moyen lumineux (12A) émettant un premier signal lumineux et un deuxième moyen lumineux (12B) émettant un deuxième signal lumineux différent du premier signal lumineux, le premier moyen lumineux (12A) et le deuxième moyen lumineux (12B) étant fixés en deux points distincts du drone (10), une
station recevant des images capturées par une caméra filmant un espace délimité (E) comprenant un volume surplombant la plateforme d'accueil et de recharge (20), le drone (10) et le calculateur (CPU) ayant des moyens de communication leur permettant de communiquer directement entre eux, ledit procédé comprenant les étapes suivantes :
- lorsque le drone (10) pénètre dans l'espace délimité (E) en vue d'atterrir sur la plateforme d'accueil et de recharge (20), l'analyse des images capturées par la caméra (30), lesdites images comprenant le drone (10), pour identifier le premier signal lumineux et le deuxième signal lumineux et ainsi localiser les premier et deuxième moyens lumineux (12A, 2B),
- la détermination de la position et de l'orientation du drone (10) en fonction de la position déterminée des premier et deuxième moyens lumineux (12A, 12B),
- la génération, par le calculateur (CPU), de consignes de pilotage destinées au drone (10), configurées pour le guider vers la plateforme d'accueil et de recharge (20),
- l'émission desdites consignes de pilotage à destination du drone (10),
- la réception et la mise en oeuvre desdites consignes par le drone (10),
**caractérisé en ce que** lesdites consignes de pilotage comprennent des consignes pour amener le drone (10) en vol stationnaire à l'aplomb du centre de la plateforme d'accueil et de recharge (20) suivies de consignes de descente du drone (10) vers la plateforme d'accueil et de recharge (20) jusqu'à l'atterrissage dudit drone (10),
et **en ce que**, lorsque le drone (10) met en oeuvre lesdites consignes de pilotage comprenant des consignes pour amener ledit drone (10) en vol stationnaire à l'aplomb du centre de la plateforme d'accueil et de recharge (20), si les images capturées par la caméra (30) ne permettent pas d'identifier le premier signal lumineux et le deuxième signal lumineux du drone (10), alors le calculateur (CPU) génère et émet des consignes de pilotage prédéfinies au drone (10) de sorte qu'il décrive un mouvement de spirale dans le plan horizontal, ce mouvement étant configuré pour conduire ledit drone (10) à pénétrer l'espace délimité (E).

2. Procédé selon la revendication 1, dans lequel les consignes de pilotage comprennent des consignes de gaz et d'attitude.

3. Procédé selon l'une des revendications précédentes, dans lequel les consignes de pilotage comprennent, lors de la mise en oeuvre des consignes de descente par le drone (10), si la position dudit drone (10) par rapport à l'aplomb du centre de la plateforme d'accueil et de recharge (20) s'écarte au-delà d'une tolérance prédéfinie, notamment au-delà de 15°, une consigne d'arrêt de la descente du drone (10) est générée, émise et mise en oeuvre le drone (10), puis des consignes de pilotage sont générées, émises et mises en oeuvre par le drone (10) de sorte à repositionner ledit drone (10) en vol stationnaire à l'aplomb du centre de la plateforme d'accueil et de recharge (20), puis des consignes de descente du drone (10) vers la plateforme d'accueil et de recharge (20) sont générées, émises et mises en oeuvre par le drone (10).

4. Procédé selon l'une des revendications précédentes, comprenant, si le drone (10) sort de l'espace délimité, l'émission d'une consigne de pilotage comprenant une consigne de remontée du drone à la verticale de sa position.

5. Procédé selon l'une des revendications précédentes, dans lequel l'espace délimité (E) est un cône ou une pyramide à base rectangulaire dont l'apex est la caméra (30) située au centre de la plateforme d'accueil et de recharge (20).

6. Système de drone, comprenant un drone (10), une plateforme d'accueil et de recharge (20) et un calculateur (CPU) , le système étant configuré pour mettre en oeuvre le procédé selon l'une
des revendications précédentes, le drone comprenant un premier moyen lumineux (12A) émettant un premier signal lumineux et un deuxième moyen lumineux (12B) émettant un deuxième signal lumineux différent du premier signal lumineux,
dans lequel les premier et deuxième moyens lumineux (12A 12B) sont fixés au drone (10) de part et d'autre d'un axe longitudinal (X) du drone (10).

7. Système selon la revendication précédente, dans lequel la plateforme d'accueil et de recharge (20) comprend un chargeur électrique présentant des connecteurs électriques (21A, 21B, 21C, 21D) et le drone (10) comprend des connecteurs électriques (11A, 11B, 11C, 11D) complémentaires, lesdits connecteurs électriques (11A, 11B, 11C, 11D) du drone et les connecteurs électriques (21A, 21B, 21C, 21D) ayant une polarité respective, et les consignes de pilotage étant configurées pour respecter les polarités lors de l'atterrissage du drone.

## Patentansprüche

1. Verfahren zur automatischen Führung einer Drohne (10) durch einen Rechner (CPU) für die Ausführung einer Landung der Drohne (10) auf einer Empfangs- und Ladeplattform (20), wobei die Drohne ein erstes Leuchtmittel (12A) umfasst, das ein erstes Lichtsignal sendet, und ein zweites Leuchtmittel (12B), das ein zweites Lichtsignal sendet, das sich vom ersten Lichtsignal unterscheidet, wobei das erste Leuchtmittel (12A) und das zweite Leuchtmittel (12B) an zwei verschiedenen Punkten der Drohne (10) befestigt sind, wobei eine Station Bilder empfängt, die von einer Kamera aufgenommen werden, die einen begrenzten Raum (E) filmt, der ein Volumen umfasst, das über der Empfangs- und Ladeplattform (20) liegt, wobei die Drohne (10) und der Rechner (CPU) Kommunikationsmittel haben, die es ihnen erlauben, direkt miteinander zu kommunizieren, wobei das Verfahren die folgenden Schritte umfasst:
- wenn die Drohne (10) in den begrenzten Raum (E) eindringt, um auf der Empfangs- und Ladeplattform (20) zu landen, das Analysieren der von der Kamera (30) aufgenommenen Bilder, wobei die Bilder die Drohne (10) umfassen, um das erste Lichtsignal und das zweite Lichtsignal zu identifizieren und so das erste und zweite Leuchtmittel (12A, 2B) zu lokalisieren,
- das Bestimmen der Position und der Ausrichtung der Drohne (10) in Abhängigkeit von der bestimmten Position des ersten und zweiten Leuchtmittels (12A, 12B),
- das Erzeugen, durch den Rechner (CPU), von Steuerungssollwerten, die für die Drohne (10) bestimmt sind, die dazu ausgelegt sind, sie zu der Empfangs- und Ladeplattform (20) zu führen,
- das Senden der Steuerungssollwerte an die Drohne (10),
- das Empfangen und das Umsetzen der Sollwerte durch die Drohne (10),
**dadurch gekennzeichnet, dass** die Steuerungssollwerte Sollwerte umfassen, um die Drohne (10) im stationären Flug senkrecht zum Zentrum der Empfangs- und Ladeplattform (20) zu führen, gefolgt von Sinksollwerten der Drohne (10) zur Empfangs- und Ladeplattform (20) bis zum Landen der Drohne (10),
und dass, wenn die Drohne (10) die Steuerungssollwerte umsetzt, die Sollwerte umfasst, die darauf abziehen, die Drohne (10) im stationären Flug senkrecht zum Zentrum der Empfangs- und Ladeplattform (20) zu führen, wenn die von der Kamera (30) aufgenommenen Bilder nicht erlauben, das erste Lichtsignal und das zweite Lichtsignal der Drohne (10) zu identifizieren, der Rechner (CPU) dann vorher festgelegte Steuerungssollwerte erzeugt und an die Drohne (10) sendet, so dass sie eine Spiralbewegung in der horizontalen Ebene beschreibt, wobei diese Bewegung dazu ausgelegt ist, die Drohne (10) zu lenken, um in den begrenzten Raum (E) einzudringen.

2. Verfahren nach Anspruch 1, wobei die Steuerungssollwerte Gas-und Haltungssollwerte umfassen.

3. Verfahren nach einem der vorangehenden Ansprüche, wobei die Steuerungssollwerte bei der Umsetzung der Sinksollwerte durch die Drohne (10), wenn die Position der Drohne (10) im Verhältnis zur Senkrechten des Zentrums der Empfangs- und Ladeplattform (20) über eine vorher festgelegte Toleranz abweicht, insbesondere über 15°, umfassen, dass ein Stoppsollwert für das Sinken der Drohne (10) erzeugt, gesendet und von der Drohne (10) umgesetzt wird, dann Steuerungssollwerte erzeugt, gesendet und von der Drohne (10) umgesetzt werden, so dass die Drohne (10) im stationären Flug erneut senkrecht zum Zentrum der Empfangs- und Ladeplattform (20) positioniert wird, dann Sinksollwerte der Drohne (10) zur Empfangs- und Ladeplattform (20) erzeugt, gesendet und von der Drohne (10) umgesetzt werden.

4. Verfahren nach einem der vorangehenden Ansprüche, umfassend, wenn die Drohne (10) den begrenzten Raum verlässt, das Senden eines Lenksollwerts, der einen Steigungssollwert der Drohne vertikal zu ihrer Position umfasst.

5. Verfahren nach einem der vorangehenden Ansprüche, wobei der begrenzte Raum (E) ein Konus oder eine Pyramide mit rechteckiger Basis ist, deren Apex die Kamera (30) ist, die sich im Zentrum der Empfangs- und Ladeplattform (20) befindet.

6. Drohnensystem, umfassend eine Drohne (10), eine Empfangs- und Ladeplattform (20) und einen Rechner (CPU), wobei das System dazu ausgelegt ist, das Verfahren nach einem der vorangehenden Ansprüche umzusetzen, wobei die Drohne ein erstes Leuchtmittel (12A) umfasst, das ein erstes Lichtsignal sendet und ein zweites Leuchtmittel (12B), das ein zweites Lichtsignal sendet, das sich vom erstes Lichtsignal unterscheidet, wobei das erste und zweite Leuchtmittel (12A 12B) an der Drohne (10) beiderseits einer Längsachse (X) der Drohne (10) befestigt sind.

7. System nach vorangehendem Anspruch, wobei die Empfangs- und Ladeplattform (20) ein elektrisches Ladegerät umfasst, das elektrische Verbinder (21A, 21B, 21C, 21D) aufweist und die Drohne (10) komplementäre elektrische Verbinder (11A, 11B, 11C, 11D) aufweist, wobei die elektrischen Verbinder (11A, 11B, 11C, 11D) der Drohne und die elektrischen Verbinder (21A, 21B, 21C, 21D) eine jeweilige Polarität haben, und die Steuerungssollwerte dazu ausgelegt sind, die Polaritäten beim Landen der Drohne zu berücksichtigen.

## Claims

1. A method for automatically guiding a drone (10) by means of a computer (CPU), for performing landing of the drone (10) on a docking and recharging platform (20), the drone comprising a first light means (12A) emitting a first light signal and a second light means (12B) emitting a second light signal different from the first light signal, the first light means (12A) and the second light means (12B) being attached at two distinct points of the drone (10), a station receiving images captured by a camera filming a delimited space (E) comprising a volume overhanging the docking and recharging platform (20), the drone (10) and the computer (CPU) having communication means enabling them to communicate directly with each other, said method comprising the following steps of:
- when the drone (10) enters the delimited space (E) with a view to landing on the docking and recharging platform (20), analyzing the images captured by the camera (30), said images comprising the drone (10), in order to identify the first light signal and the second light signal and thus locate the first and second light means (12A, 2B),
- determining the position and orientation of the drone (10) according to the position determined of the first and second light means (12A, 12B),
- generating, by the computer (CPU), piloting instructions intended for the drone (10), configured to guide it towards the docking and recharging platform (20),
- emitting said control instructions to the drone (10),
- receiving and implementing said instructions by the drone (10),
**characterized in that** said piloting instructions comprise instructions for bringing the drone (10) into hovering flight in vertical alignment with the center of the docking and recharging platform (20) followed by instructions for descending the drone (10) towards the docking and recharging platform (20) until said drone (10) has landed,
and **in that**, when the drone (10) implements said piloting instructions comprising instructions aimed at bringing said drone (10) into hovering flight in vertical alignment with the center of the docking and recharging platform (20), if the images captured by the camera (30) do not make it possible to identify the first light signal and the second light signal of the drone (10), then the computer (CPU) generates and emits predefined piloting instructions to the drone (10) so that it describes a spiral movement in the horizontal plane, this movement being configured to lead said drone (10) to penetrate the delimited space (E).

2. The method of claim 1, wherein the piloting instructions comprise throttle and attitude instructions.

3. The method according to one of the preceding claims, wherein the piloting instructions comprise, upon implementing the descent instructions by the drone (10), if the position of said drone (10) with respect to the vertical alignment of the center of the docking and recharging platform (20) deviates beyond a predefined tolerance, especially beyond 15°, an instruction to stop the descent of the drone (10) is generated, emitted and implemented by the drone (10), then piloting instructions are generated, emitted and implemented by the drone (10) so as to reposition said drone (10) in hovering flight in vertical alignment with the center of the docking and recharging platform (20), and then instructions for descent of the drone (10) towards the docking and recharging platform (20) are generated, emitted and implemented by the drone (10).

4. The method according to one of the preceding claims, comprising, if the drone (10) leaves the delimited space, emitting a piloting instruction comprising an instruction for the drone to ascend to the vertical of its position.

5. The method according to one of the preceding claims, wherein the delimited space (E) is a cone or a pyramid with a rectangular base, the apex of which is the camera (30) located at the center of the docking and recharging platform (20).

6. A drone system, comprising a drone (10), a docking and recharging platform (20) and a computer (CPU), the system being configured to implement the method according to one of the preceding claims, the drone comprising a first light means (12A) emitting a first light signal and a second light means (12B) emitting a second light signal that is different from the first light signal, wherein the first and second light means (12A, 12B) are attached to the drone (10) on either side of a longitudinal axis (X) of the drone (10).

7. The system according to the preceding claim, wherein the docking and recharging platform (20) comprises an electrical charger having electrical connectors (21A, 21B, 21C, 21D) and the drone (10) comprises complementary electrical connectors (11A, 11B, 11C, 110), said electrical connectors (11A, 11B, 11C, 11D) of the drone and the electrical connectors (21A, 21B, 21C, 21D) having a respective polarity, and the control instructions being configured to respect the polarities when the drone lands.
